Europäisches Patentamt

(19)  European Patent Office

Office européen des brevets

(11)  **EP 0 470 245 B1**

(12)  # EUROPEAN PATENT SPECIFICATION

(45) Date of publication and mention
of the grant of the patent:
**31.07.1996  Bulletin 1996/31**

(21) Application number: **91906368.5**

(22) Date of filing: **25.02.1991**

(51) Int Cl.[6]: **G10L 3/00**

(86) International application number:
**PCT/US91/01333**

(87) International publication number:
**WO 91/13430 (05.09.1991 Gazette 1991/21)**

(54) **METHOD FOR SPECTRAL ESTIMATION TO IMPROVE NOISE ROBUSTNESS FOR SPEECH RECOGNITION**

SPEKTRALBEWERTUNGSVERFAHREN ZUR VERBESSERUNG DER WIDERSTANDSFÄHIGKEIT GEGEN RAUSCHEN BEI DER SPRACHERKENNUNG

PROCEDE D'ESTIMATION SPECTRALE DESTINE A REDUIRE LA SENSIBILITE AU BRUIT POUR LA RECONNAISSANCE DE LA PAROLE

(84) Designated Contracting States:
**BE DE FR GB NL**

(30) Priority: **28.02.1990  US 486462**

(43) Date of publication of application:
**12.02.1992  Bulletin 1992/07**

(73) Proprietor: **SRI INTERNATIONAL**
**Menlo Park, California 94025-3493 (US)**

(72) Inventors:
- **ERELL, Adoram**
**Fac. of Engineering, 69 978 Ramat Aviv (IL)**
- **WEINTRAUB, Mitchel**
**Fremont, CA 94536 (US)**

(74) Representative: **Harris, Ian Richard**
**c/o D. Young & Co.,**
**21 New Fetter Lane**
**London EC4A 1DA (GB)**

(56) References cited:
**EP-A- 0 240 330**

- **ICASSP 88, International Conference on Acoustics, Speech, and Signal Processing, New York, 11-14 April 1988, vol. 1, IEEE, Y. Ephraim et al.: "On the application of hidden Markov models for enhancing noisy speech", pp. 533-536**

- **IEEE Transactions on Acoustics, Speech and Signal Processing, vol. ASSP-33, no. 2, April 1985, IEEE, (New York, US), Y. Ephraim et al.: "Speech enhancement using a minimum mean-square error log-spectral amplitude estimator", pp. 443-445**
- **IEEE Transactions on Acoustics, Speech and Signal Processing, vol. ASSP-32, no. 6, December 1984, IEEE, (New York, US), Y. Ephraim et al.: "Speech enhancement using a minimum mean-square error short-time spectral amplitude estimator", pages 1109-1121**
- **IEEE Transactions on Acoustics, Speech, and Signal Processing, vol. 37, no. 10, October 1989, IEEE, (New York, US), A. Nadas et al.: "Speech recognition using noise-adaptive prototypes", pages 1495-1502**
- **IEEE Transactions on Information Theory, vol. 34, no. 4, July 1988, IEEE, Y. Ephraim et al.: "A unified approach for encoding clean and noisy sources by means of waveform and autoregressive model vector quantization", pages 826-834**
- **Computer Speech and Language, vol. 3, April 1989, Academic Press Ltd, D. Van Compernolle: "Noise adaptation in a hidden Markov model speech recognition system", pp. 151-167**

**Description**

This invention relates to methods for preprocessing speech in the presence of noise, for use with a speech recognition system for responding to signals representative of digitized speech.

Speech recognition systems are very sensitive to differences between a training condition which is free of noise and operating conditions in the presence of noise. In particular, speech recognition systems can be trained to recognize specific speech patterns in the absence of noise and are therefore trained on high-quality speech. However, such systems degrade drastically in noisy environments.

Several methods for handling this problem are known, among them are methods of supplementing the acoustic preprocessing of a speech recognizer with a statistical estimator. A statistical estimator as used herein is intended to provide to a speech recognizer input values or signals which can be assumed to be clean speech information.

The task of designing a statistical estimator for speech recognition is that of defining an optimality criterion that will match the recognizer and of deriving an algorithm to compute the estimator based on this criterion. Defining the optimality criterion is easier for speech recognition than it is for speech enhancement for human listeners, since the signal processing technique is known in the former but not in the latter. For a recognition system which is based on a distance metric, whether for template matching or vector quantization, it is reasonable to assume that the optimality criterion is to minimize the average distortion as measured by that distance metric. Achieving this criterion is frequently computationally infeasible.

With discrete Fourier transform (DFT), filter-bank based systems, the distance measure which is typically used is a weighted Euclidean distance on the cosine transform of the logarithm of the output energy of the filters, often referred to as the "liftered cepstral distance." (The cepstrum in a filter-bank system is defined as a transform of the filter energies.) Achieving this estimation criterion using this distance metric is computationally difficult with additive noise. Published estimation algorithms which have been applied to filter-bank based systems are the minimum mean square error (MMSE) algorithm and the spectral subtraction algorithm, applied to either discrete Fourier transform (DFT) coefficients or filter-bank output energies. (Reference to Porter et al. and Van Compernolle 1 & 2 discussed below.) A basic difference between the multiple-dimensional cepstral distance optimality criterion and the single frequency channel minimum mean square error (MMSE) distance criterion is that the cepstral distance implies a joint estimation of a feature vector whereas the MMSE distance implies an independent estimation of scalar quantities. Because the speech spectral energies at different frequencies are in fact correlated, use of an independent estimate of individual frequency channels results in suboptimal estimation.

This art presumes a basic familiarity with statistics and Markov processes, as well as familiarity with the state of the art in speech recognition systems using hidden Markov models. By way of example of the state of the art, reference is made to the following patents and publications, which have come to the attention of the inventors in connection with the present invention. Not all of these references may be deemed to be relevant prior art.

| Inventor | U.S. Patent No. | Issue Date |
|---|---|---|
| Bahl et al. | 4,817,156 | 03/28/89 |
| Levinson et al. | 4,587,670 | 05/06/86 |
| Juang et al. | 4,783,804 | 11/08/88 |
| Bahl et al. | 4,741,036 | 04/26/88 |

| Inventor | Foreign Patent No. | Pub. Date |
|---|---|---|
| Sedgwick et al. | EP 240,330 | 10/07/87 |

Papers

Rabiner, "A Tutorial on Hidden Markov Models and Selected Applications in Speech Recognition," Proc. IEEE, Vol. 77, No. 2, Feb. 1989.

Nadas et al., " Speech Recognition Using noise-adaptive prototypes," IEEE Trans. on ASSP, Vol. 37, No. 10, Oct. 1989.

Stern et al., "Acoustical pre-processor for robust speech recognition," Proc. DARPA Speech and Natural Language Workshop, Session, October 1989.

Ephraim et al., "Speech Enhancement Using a Minimum Mean-Square Error Short-Time Spectral Estimator", IEEE Trans. ASSP, Vol. 32, pp. 1109-1112 (Dec. 1984).

Ephraim et al., "Speech Enhancement Using a Minimum Mean-Square Error Log-Spectral Amplitude Estimator", IEEE Trans. ASSP, Vol. 33, pp. 443-447 (Apr. 1985).

Porter et al., "Optimal Estimators for Spectral Restoration of Noisy Speech", Proc. ICASSP, Vol. 2, pp. 18A2.1-2.4 (1984).

Van Compernolle, "Noise Adaptation in a Hidden Markov Model Speech Recognition System", Computer Speech and Language, Vol. 3, pp. 151-167, 1989.

Van Compernolle, "Spectral Estimation Using a Log-Distance Error Criterion Applied to Speech Recognition", Proc. ICASSP, Vol. 1, pp. 258-261 (1989).

Gray, "Vector Quantization", The ASSP Magazine, Vol. 1, No. 2, pp. 3-29 (April 1984).

Epraim et al., "On the Application of Hidden Markov Models for Enhancing Noisy Speech", ICASSP 88, Vol. 1, IEEE, pp 533-536 (1988).

The Rabiner paper is a survey article on Hidden Markov Model applications to speech recognition which is background for understanding the present invention. It does not address the noise problem.

The remaining patents and publications describe other work in the general field.

The Nadas et al. paper describes a method that addresses the noise problem. It is not however a preprocessing method.

The Stern et al. paper describes a method that addresses the noise problem using a preprocessor based on spectral subtraction.

The Van Compernolle (1) is a description of a spectral subtraction type of preprocessor.

The Van Compernolle (2) is a description of a preprocessor using Minimum Mean Square Error independent estimation of single channels.

The Porter et al. and Ephraim et al. papers describe preprocessors for use in speech recognition techniques using the minimum mean square error estimation of various functions of the digital Fourier transform (DFT) coefficients, including the logarithm of the DFT amplitude. These techniques deal only with single DFT coefficients.

Sedgwick et al. describes work at the National Resource Development Corporation on a noise compensation apparatus for speech recognition system, wherein input signals corresponding to levels in frequency spectrum regions are derived and the (Euclidean) distance for noisy input cells is determined to take advantage of noise level during both recognition and training. In both recognition and training processes, signals reaching a microphone are digitized and passed through a filter bank to be separated into frequency channels. In training, a noise estimator and a masker are used with a recognizer to prepare and store probability density functions (PDFs) for each channel partially defining Markov models of words to be recognized. The PDFs are derived only from input signals above noise levels, but derivation is such that the whole of each PDF is represented. In recognition, "distance" measurements on which recognition is based are derived for each channel. If the signal in one channel is above the noise level, then the distance is determined by the recognizer from the negative logarithm of the PDF. If a channel signal is below a noise level, then the distance is determined from the negative logarithm of the cumulative distance of the PDF to the noise level. This publication describes a recognition system with noise compensation, but it does not address preprocessing to address the noise problem.

Bahl et al. '156 describes IBM work on apparatus and method for training the statistics of a Markov model speech recognizer to a subsequent speaker. Therein, the invention determines label output probabilities at transitions in the Markov models corresponding to the subsequent speaker where there is sparse training data. This patent does not address the noise problem.

Levinson et al. describes AT&T Bell Labs work on a speech recognizer which includes a plurality of stored constrained hidden Markov model reference templates and a set of stored signals representative of prescribed acoustic features of the plurality of reference patterns. This patent does not address the noise problem.

Juang et al. describes further AT&T Bell Labs work on a hidden Markov model speech recognition arrangement. Markov model speech pattern templates are formed by analyzing identified speech patterns to generate frame sequences of acoustic feature signals. This patent does not address the noise problem.

Bahl et al. '036 describes IBM work in a speech recognition system whereby discrimination between similar sounding uttered words is improved by weighting the probability vector data stored for the Markov model representing the reference word sequence of phones. The weighting vector is derived for each reference word by comparing similar sounding utterances using Viterbi alignment and multivariate analysis which maximises the differences between correct and incorrect recognition multivariate distributions. This patent does not address the noise problem.

The Ephraim et al. paper in ICASSP 88 describes an algorithm for enhancing noisy speech which have been degraded by statistically independent additive noise. The algorithm is based upon modelling the clean speech as a hidden Markov process with mixtures of Gaussian autoregressive (AR) output processes, and the noise process as a sequence of stationary, statistically independent, Gaussian AR vectors. The parameter sets of the models are estimated using training sequences from the clean speech and the noise process. The parameter set of the hidden Markov model is estimated by the segmental K-means algorithm. Given the estimated models, the enhancement of the noisy speech is done by alternate maximization of the likelihood function of the noisy speech, once over all sequences of states and mixture components assuming that the clean speech is given, and then over all vectors of the original speech using the resulting most probable sequence of states and mixture components. This alternating maximization is equivalent to first estimating the most probable sequence of AR models for the speech signal using the Viterbi algorithm, and then applying these AR models for constructing a sequence of Wiener filters which are used to enhance the noisy speech.

None of the above-mentioned prior art teaches how to approximate the cepstral distance optimality criterion in preprocessing of noisy speech in a speech recognition system in a computationally feasible manner.

In accordance with the invention, a computationally-feasible method is provided for use in preprocessing noisy speech to reduce likelihood of error in estimation for use in a speech recognizer.

In accordance with one aspect of the present invention, there is provided a method for preprocessing signals representative of digitized speech in the presence of noise, comprising the steps of:

> categorizing each time-invariant segment of digitized speech and noise into a noisy speech vector, each element of said noisy speech vector representing one frequency channel of speech information in the presence of noise, said noise being assumed to be additive, time invariant and uncorrelated to the frequency domain;
> determining the probability distribution of clean speech by applying the noisy speech vector to a mixture model composed of a mixture of components, each component representing a different speech class assuming different frequency channels are uncorrelated within each class;
> modelling the conditional probability function of a vector of noisy speech around a vector of clean speech as uncorrelated at different frequency channels; and
> estimating a clean speech signal comprising a clean speech vector for each said element from said noisy speech vector based on the determined probability distribution and the modelled conditional probability function.

In accordance with another aspect of the present invention, there is provided a method for preprocessing signals representative of digitized speech in the presence of noise, comprising the steps of:

> training a Markov model with clean speech, each state of the Markov model representing a different speech class assuming different parameters for said Markov model;
> categorizing each time-invariant segment of digitized speech and noise into a noisy speech vector, each element of said noisy speech vector representing one frequency channel of speech information in the presence of noise, said noise being assumed to be frequency independent and time invariant;
> determining a probability distribution of the clean speech vector by applying the noisy speech vector to the Markov model using said parameters;
> modelling a conditional probability function of a vector of noisy speech around a vector of clean speech as uncorrelated at different frequency channels; and
> estimating a clean speech signal comprising a clean speech vector for each vector of a sequence of said noisy speech vectors $S'_o$ to $S'_T$ based on the determined probability distribution and the modelled conditional probability function.

Preferred features of the invention are defined in the appended subsidiary claims.

The invention will be better understood upon reference to the following detailed description of specific examples, taken thereof in conjunction with the accompanying drawings, in which:

> Figure 1 is a block diagram of a speech recognition system incorporating a preprocessor employing a method in accordance with the invention;
> Figure 2 is a block diagram of a single frame MMLSD estimator using a mixture model according to a first method in accordance with the invention.
> Figure 3 is a flow chart illustrating a computation of a mixture of Gaussians model used in connection with the invention; and
> Figure 4 is a block diagram of a MMLSD estimator for a sequence of time frames using a Markov model according to a second method in accordance with the invention.

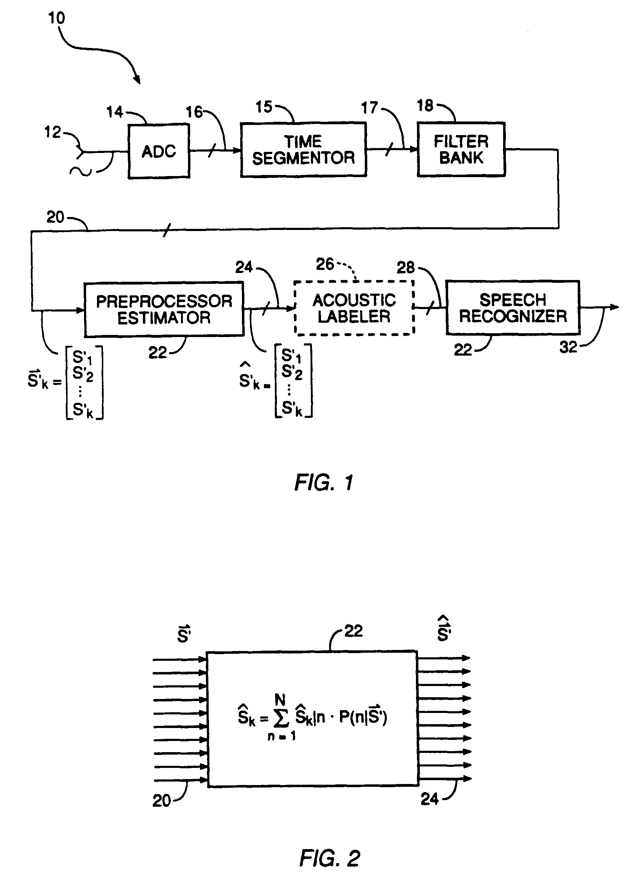

Figure 1 is a block diagram of a speech recognition system 10 incorporating a preprocessing estimator 22 employing a method in accordance with the invention. The system 10 depicted is a filter-bank-based system employing a hidden Markov process recognizer. Alternatively, a template matching system could be employed for speech recognition. The recognition system 10 receives an analog time-domain signal representing speech in the presence of noise at an input 12, which in turn is applied to a feature extractor comprising an analog to digital converter (ADC) 14 and a filter bank 18. The ADC 14 converts the analog signal to digitized speech which are then applied on digital signal lines 16 to a time segmenter 15. The time segmenter 15 segments the digitized signal into time frames for subsequent processing. Output on lines 17 are applied to a filter bank 18. The filter bank 18 categorizes the speech+noise (noisy speech) components into a vector of filter log energies (or more generally spectral log energies) S' with components $S'_k$ for each time frame, each component representing one filter channel of speech information. The vector S' is then applied via lines 20 to a preprocessor 22 which functions as an estimator of the clean speech. The output of the preprocessor 22 is in the form of a estimate of clean speech, a vector $\hat{S}$.

The vector $\hat{S}$ is optionally applied on lines 24 to an acoustic labeler 26 or directly to a speech recognizer 30.

The preprocessor 22 functions such that all subsequent processing treats input signals as if no noise is present. Three possible speech recognizers can be used with the preprocessor 22 in accordance with the invention. The speech recognizer 30 may be a discrete density Hidden Markov Model (HMM) recognizer with an acoustic labeler using a distance metric for acoustic labeling. Alternatively, it may use a continuous density HMM recognizer which uses a probabilistic algorithm for acoustic labeling but no distance metric. Still further, the speech recognizer 30 may use template matching, such as dynamic time warping, which uses a distance metric for the template matching. The output of the speech recognizer 30 on lines 32 is the recognized speech.

Referring now to Figure 2, there is shown a first embodiment of a preprocessor 22 in accordance with the invention. The preprocessor 22 of Figure 2 computes an estimate, for each time frame, of the vector of clean speech $\hat{S}$ from the vector of noisy speech S' based on:

1) the assumption that the probability distribution of clean speech can be modeled by a mixture of components as a mixture model, each component representing a different speech class assuming different frequency channels are uncorrelated within each class, and based on

2) a conditional probability function of a vector of noisy speech around a vector of clean speech which is based on the assumption that noise at different frequency channels is uncorrelated.

The estimator is a minimum mean square error (MMSE) estimation of the vector S, where the mean square error is in the vector Euclidean sense. The minimum Euclidean distance on the vector S of K filter log-energies yields the following <u>vector</u> estimator, (where **boldface** indicates a vector):

$$\hat{S} = \int S\ P(S|S')\ dS \qquad (1)$$

Using Bayes' Rule, the estimator is therefore of the form:

$$\hat{S} = \frac{1}{P\ (S')}\ \int S\ P(S'|S)\ P(S)\ dS \qquad (2)$$

where the probability for the vector S' is given by:

$$P(S') = \int P\ (S'|S)\ P(S)\ dS \qquad (3)$$

This estimator is considerably more complex than a single channel-type estimator because it requires integration of K-dimensional probability distributions, e.g., 25 dimensions for 25 frequency channels. In accordance with the invention, approximated models for both the probability of S and the probability of S' around S can be used in the computation, since the assumptions are that the noise is additive and that the vector S is the vector of filter-bank log-energies.

First, the conditional probability of the vector S' around the vector S, or P(S'|S), can be modeled simply as the product of the marginal probabilities, or:

$$P\ (S'|S)\ =\ \prod_{k=1}^{K}\ P\ (S'_k|S_k) \qquad (4)$$

since it is assumed that Gaussian noise is uncorrelated in the frequency domain and since the energy value of a given noisy filter $S'_k$ depends only on the clean energy $S_k$ and on the noise level at that frequency (i.e., within the passband of the filter at that frequency). This model is merely an approximation, however, where the passbands of the filters overlap.

The conditional probability $P(S'_k|S_k)$ can be modeled as follows:

Assume that the noise associated with the speech to be estimated can be represented by a stationary, ARMA (autoregressive moving average) stochastic process (i.e, viewed as white noise colored by linear filtering). Therefore, at each time frame, the coefficients of the discrete Fourier transform (DFT) for the noise are uncorrelated complex Gaussian random variables. Assume further that the filter output energy can be approximated by a sum of M coefficients. Finally, assume that the noise spectral power is uniform within the range of summation. With only noise present (i.e., no speech), the sum extends over a total of 2M random variables which are Gaussian, of zero mean and of a variance:

$$\sigma^2 = (N_k)/(2M) \tag{5}$$

where $N_k$ is the expected value of the noise filter energy. Under these conditions, the variance-normalized filter energy will obey a chi-squared probability distribution (PD) with 2M degrees of freedom.

In the presence of speech and noise, the filter energy is given by:

$$E'_k = \sum_i |DFT_s(i) + DFT_n(i)|^2 \tag{6}$$

where $DFT_s$ refers to speech coefficients and $DFT_n$ refers to noise coefficients.

The random variable given by Equation 6 divided by Equation 5, or $E'_k/\sigma^2$, will then obey a different probability distribution, namely, a probability distribution of noncentral chi-squared with 2M degrees of freedom and noncentral parameter $\lambda$.

Thus the conditional probability of the filter energy is given by:

$$P\left[\frac{E'_k}{N_k} \Big| \frac{E_k}{N_k}\right] = 2M \cdot \chi^2_{N.C.}\left[\frac{2ME'_k}{N_k}; \ 2M, \lambda\right] \tag{7a}$$

where

$$\lambda = \sum_i \frac{|DFT_s(i)|^2}{\sigma^2} = \frac{2ME_k}{N_k}. \tag{7b}$$

With the following normalized log-energy variable defined,

$$S_k = 10 \log_{10}\left[\frac{E_k}{N_k}\right]; \quad S'_k = 10 \log_{10}\left[\frac{E'_k}{N_k}\right], \tag{8}$$

the conditional probability for $S'_k$ is finally given by

$$P(S'_k | S_k) = 0.23 \frac{E'_k}{N_k} P\left[\frac{E'_k}{N_k} \Big| \frac{E_k}{N_k}\right] \tag{9}$$

The value $S'_k$ is the filter log-energy value of observed speech in the presence of noise for the $k^{th}$ filter, and value $S_k$ is the filter log-energy value of clean speech.

The conditional probability of $S'_k$ around $S_k$ given by Equation 9 provides the needed "fuzziness" in the probability distribution to account for the uncertainty around the speech element S in the presence of noise.

There may be less than 2M degrees of freedom in actual practice due to deviations from the model assumptions. In particular, the filters are typically defined with trapezoidal frequency windows (rather than box-car or rectangular frequency windows), and the Hamming window of the discrete Fourier transform introduces correlations between the noise DFT coefficients. In addition, the noise spectrum of very broad filters may not be flat within the range of a single filter.

Second, a model is required for the probability distribution (PD) of the clean speech vector P(S). The clean-speech PD cannot be represented in the frequency domain as a product of the marginal probabilities. Rather, this PD can be modeled by a mixture model in the form:

$$P(S) = \sum_{n=1}^{N} C_n P_n(S), \quad P_n(S) = \prod_{k=1}^{K} P_n(S_k) \tag{10}$$

where $C_n$ are mixture coefficients, and N is the number of mixture components or classes.

This model is based on the idea that the acoustic space can be divided into classes within which the correlation between different frequency channels is significantly smaller than within the space as a whole. The classes can represent either mutually exclusive or overlapping regions of the acoustic space. As hereinafter explained, the estimator for clean speech is given by:

$$\hat{S}_k = \sum_{n=1}^{N} \hat{S}_k|n \cdot P(n|S') , \qquad (11)$$

where index n is a class and where the first term (estimate of $S_k$ around n) is the $n^{th}$ class-conditioned MMSE estimator given in a computationally-feasible form by:

$$\hat{S}_k|n = \frac{1}{P(S'_k|n)} \int S_k \, P(S'_k|S_k) \, P_n(S_k) \, dS_k \qquad (12)$$

where

$$P(S'_k|n) = \int P(S'_k|S_k) \, P_n(S_k) \, dS_k \qquad (13)$$

and the second term (the a posteriori probability of n given the vector S', i.e., that the clean speech vector belonged to the $n^{th}$ class) is given by:

$$P(n|S') = \frac{C_n \, P(S'|n)}{\sum_{n=1}^{N} C_n \, P(S'|n)} \qquad (14)$$

where

$$P(S'|n) = \prod_{k=1}^{K} P(S'_k|n) . \qquad (15)$$

Thus the estimator can be viewed as a weighted sum of class-conditioned MMSE estimators. Where N=1, the resulting estimator is identical to an MMSE estimator of individual channels.

In order to realize a computationally-feasible estimator according to the invention, it is necessary to employ a mixture model to model P(S) by equation 10. Several implementation of the mixture model may be employed, depending on the application.

The simplest implementation of the mixture model is by vector quantization. The vector quantization mixture model identifies the classes with rigid-boundary partitions of the acoustic space and creates the partitions by vector quantization. A codebook of size N is created using the Lloyd algorithm. (The Lloyd algorithm is given in the literature in Gray.) The codebook minimizes the distortion as measured by the Euclidean distance, and $P_n(S_k)$ is estimated from a histogram of all speech frames quantized into codeword n.

Another implementation of the mixture model which provides a better fit within computationally-feasible methods is a mixture of Gaussians model. This model is a parametric model for the PDs adjusted so as to maximize the likelihood of observed data given the model.

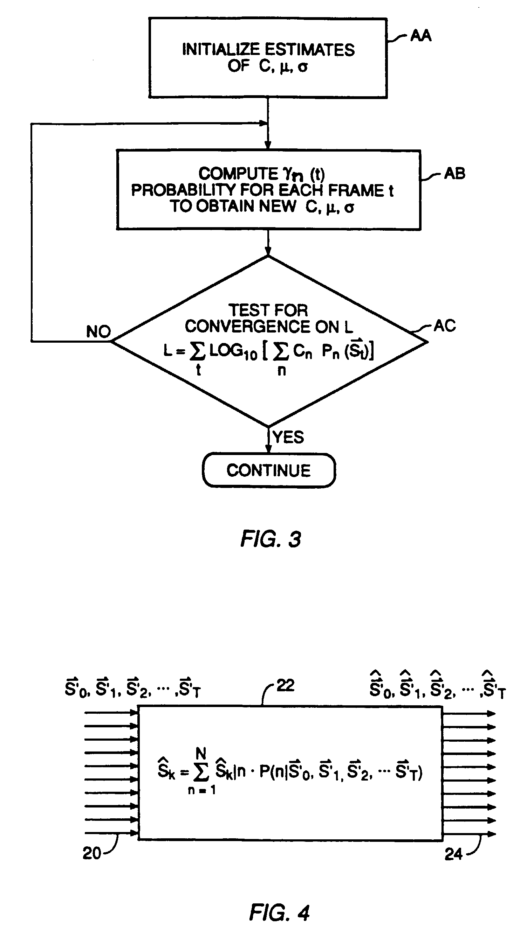

Parameterization with a mixture of Gaussians model begins with the assumptions that the probabilities $P_n(S_k)$ are Gaussian distributions, each with a mean value of $\mu_{nk}$ and a standard deviation $\sigma_{nk}$. The maximum likelihood problem thus becomes a problem of estimating Hidden Markov Model (HMM) parameters with continuous densities, where the model comprises a single state with N multivariate Gaussian components of diagonal covariance matrices. Figure 3 illustrates steps for parameter estimation using an iterative procedure as follows:

Make initial estimates of C, $\mu$ and $\sigma$ (Step AA). A reasonable starting point for these "seed" values would be the classification by vector quantization using as values the relative numbers of vectors in each class, their mean and their standard deviation.

Next, perform a loop on all speech frames and for each frame "t" compute the probability $\gamma_n(t)$ according to the equations:

$$\gamma_n(t) = \frac{C_n P_n(S_t)}{\sum_n C_n P_n(S_t)} \qquad (16)$$

where $P_n(\hat{S}_t)$ is computed using the current values of $\mu$ and $\sigma$ (Step AB). The new parameter estimates are then given by the following time averages

$$C_n = <\gamma_n(t)>$$ (17)

$$\mu_{nk} = \gamma_n(t)S_k(t)$$ (18)

$$\sigma^2_{nk} = \gamma_n(t)\{S_k(t) - \mu_{nk}\}^2$$ (19)

Finally, test for convergence of the total likelihood given by:

$$L = \sum_t \log_{10} [\sum_n C_n P_n(S_t)]$$ (20)

(Step AC). If convergence is not attained, then Step AB is repeated, and the convergence test (Step AC) is repeated until convergence is attained.

The above methods have potential difficulties in practice. First, filter-bank-based systems have filters with passbands that typically overlap, and second, the computational load, even in the foregoing model, may be excessive, particularly for interactive or near real-time recognition systems. With overlapping filters, the assumptions regarding statistical independence of channels are incorrect. While overlapping filters can be replaced with non-overlapping filters, it is also possible to apply a "Broadband" mixture model to reduce the computational load.

With overlapping filters, a K-dimensional vector of filter log-energies can be represented by a vector of less than K dimensions assuming a fewer number of filters with broad yet non-overlapping passbands. Quantization using the VQ mixture model is thereby simplified, and a new, lower-dimensional vector is introduced as a wideband spectral vector R, defined as the log energy in a number of frequency bands. The classification of speech frames proceeds by quantizing the vectors R with a codebook of size N. The mixture components $P_n(S_k)$ of Equation 10 are then estimated based on these classes, and the <u>a posteriori</u> cluster probability is conditioned on the vector R' rather than on the vector S' as in Equation 11.

$$S_k = \sum_{n=1}^{N} S_k|n \cdot P(n|R')$$ (21)

Equation 21 replaces Equation 11 and the <u>a posteriori</u> cluster probabilities replacing Equations 14 and 15 are given by:

$$P(n|R') = \frac{C_n P(R'|n)}{\sum_{n=1}^{N} C_n P(R'|n)}$$ (22)

where

$$P(R'|n) = \prod_{j=1}^{J} P(R'_j|n) \cdot$$ (23)

where j is a broadband channel, $R_j$ is the log-energy in channel j, the total number of bands is J.

$P(r'_j|)$ is computed similarly to Equation 13, where $R_j$ and $R'_j$ replace $S_k$ and $S'_k$. $P_n(R_j)$ can be either estimated from histograms of the speech frames quantized into codeword n, using vector quantization or it can be modelled by a Gaussian, similar to Gaussian Mixture modelling. $P(R'_j|R_j)$ can similarly be modelled after $P(S'_k|S_k)$ of Equation 9. The advantage of this method is therefore in the smaller number of integrals to be computed and multiplied in Equation (22), relative to Equation (14).

Referring now to Figure 4, there is illustrated a second embodiment of a preprocessor 22 in accordance with the invention. The preprocessor 22 of Figure 4 computes an estimate, for a sequence of time frames, of the vectors of clean speech, $\hat{S}_0$ to $\hat{S}_T$ from the sequence of vectors of noisy speech, $S'_0$ to $S'_T$, based on:

1) the assumption that the probability distribution of clean speech can be modeled by a Markov model, each state of the Markov model representing a different speech class assuming different frequency channels are uncorrelated within each class, and based on

2) a conditional probability function of a vector of noisy speech around a vector of clean speech which is based on the assumption that noise at different frequency channels is uncorrelated.

The estimator is a minimum mean square error (MMSE) estimation of a sequence of vectors $S_0$ to $S_T$, where the mean square error is in the vector Euclidean sense. The minimum Euclidean distance estimator of vector S of K filter log-energies given the sequence of noisy vectors $S'_0$ to $S'_T$, yields the following <u>vector</u> estimator:

$$\hat{S}_t = \int S_t \, P(S_t | S'_0, ..., S'_t ... S'_T) \, dS_t. \tag{24}$$

This vector estimator is computed using the following assumptions. The speech can be modeled by a Markov process so that the speech at any time t is in any one of N different states. The output probability distribution (PD) for state "n" is given by:

$$P_n(S) = \prod_{k=1}^{K} P_n(S_k). \tag{25}$$

The state output probability distributions and the transition probabilities between states are computed by identifying the states with partitions of the acoustic space. These partitions are exactly the same as those used in the vector quantization mixture model or the wideband vector quantization mixture model hereinabove. The transition probabilities are estimated from speech data by counting the number of transitions from one state to another.

With additive noise, the noisy speech is modeled by a Hidden Markov Model (HMM) where the states correspond to the states of the clean speech, and the output probability distributions are given by:

$$P(S' | n) = \prod_{k=1}^{K} P(S'_k | n). \tag{26}$$

where $P(S'_k | n)$ is given by

$$P(S'_k | n) = \int P(S'_k | S_k) \, P_n(S_k) \, dS_k \tag{27}$$

and where $P_n(S_k)$ is the output probability distribution of the $k^{th}$ component of the clean speech vector S for state "n". The probability of $S'_k$ given $S_k$ is computed using equations 7-9 hereinabove.

Given all of these assumptions, the estimator of Figure 4 is given by:

$$\hat{S}_k = \sum_n \hat{S}_k | n \cdot P(n | S'_0, ..., S'_t ... S'_T). \tag{28}$$

The probability of state "n" given the sequence of noisy speech vectors in Equation 28 is computed by the forward-backward algorithm applied to the HMM of the noisy speech defined above. The forward-backward algorithm is for example given in the Rabiner (1989) review article, referenced above.

**Claims**

1. A method for preprocessing signals representative of digitized speech in the presence of noise, comprising the steps of:

   categorizing each time-invariant segment of digitized speech and noise into a noisy speech vector, each element of said noisy speech vector representing one frequency channel of speech information in the presence of noise, said noise being assumed to be additive, time invariant and uncorrelated to the frequency domain;
   determining the probability distribution of clean speech by applying the noisy speech vector to a mixture model composed of a mixture of components, each component representing a different speech class assuming different frequency channels are uncorrelated within each class;
   modelling the conditional probability function of a vector of noisy speech around a vector of clean speech as uncorrelated at different frequency channels; and
   estimating a clean speech signal comprising a clean speech vector for each said element from said noisy speech vector based on the determined probability distribution and the modelled conditional probability function.

2. The method according to claim 1, wherein said estimating step comprises:
estimating filter log spectral energies on a multiple-frequency channel probability according to the function:

$$S_k = \sum_{n=1}^{N} S_k|n \cdot P(n|S')$$

where index n is a class and where the estimate of $S_k$ around n is the $n^{th}$ class-conditioned MMSE estimator given by:

$$S_k|n = \frac{1}{P(S'_k|n)} \int S_k \, P(S'_k|S_k) \, P_n(S_k) \, dS_k$$

where

$$P(S'_k|n) = \int P(S'_k|S_k) \, P_n(S_k) \, dS_k \; .$$

3. The method according to claim 2 wherein said estimating step comprises applying a minimum meanlog-spectral-distance estimation to said vector of noisy speech to obtain an estimation of Euclidean distance.

4. The method according to claim 1 wherein said conditional probability of a noisy speech vector around a clean speech vector $P(S'_k|S_k)$ is modeled as follows:

   1) noise associated with said speech to be estimated is assumed to be a stationary, autoregressive moving average stochastic process such that, at each time frame, coefficients of a discrete Fourier transform (DFT) for said noise are uncorrelated complex Gaussian random variables;
   2) filter output energy is assumed to be approximated by a sum of M coefficients;
   3) noise spectral power is assumed to be uniform within a range of passbands of filters;

   such that, in the presence of noise alone, said summation extends over a total of 2M random variables which are Gaussian, of zero mean and of a variance:

$$\sigma^2 = (N_k)/(2M)$$

where $N_k$ is the expected value of the noise filter energy wherein variance-normalized filter energy obeys a chi-squared probability distribution (PD) with 2M degrees of freedom, and
such that, in the presence of speech and noise, filter energy is given by:

$$E'_k = \sum_i |DFT_s(i) + DFT_n(i)|^2$$

where $DFT_s$ refers to speech coefficients and $DFT_n$ refers to noise coefficients, wherein said variance-normalized filter obeys a probability distribution of noncentral chi-squared with 2M degrees of freedom and noncentral parameter $\lambda$;
in order that the conditional probability of the filter energy is given by:

$$P\left[\frac{E'_k}{N_k} \bigg| \frac{E_k}{N_k}\right] = 2M \cdot \chi^2_{N.C.}\left[\frac{2ME'_k}{N_k}, \; 2M, \lambda\right]$$

where

$$\lambda = \sum_i \frac{|DFT_s(i)|^2}{\sigma^2} = \frac{2ME_k}{N_k}$$

so that, with the following normalized log-energy variable defined as:

$$S_k = 10 \ \log_{10} \left[ \frac{E_k}{N_k} \right] \ ; \ S'_k = 10 \ \log_{10} \left[ \frac{E'_k}{N_k} \right] ,$$

the conditional probability for $S'_k$ is given by

$$P \ (S'_k | S_k) = 0.23 \ \frac{E'_k}{N_k} \ P \left[ \frac{E'_k}{N_k} \ \Big| \ \frac{E_k}{N_k} \right] .$$

5. The method according to claim 1 wherein said mixture model is implemented as a vector quantization mixture model where classes are identified with rigid boundary partitions of the acoustic space and the partitions are created by vector quantization.

6. The method according to claim 1 wherein said mixture model is implemented as a mixture of Gaussians mixture model with the assumptions that the probabilities Pn(Sk) are Gaussian distributions and the mean and standard deviations of these Gaussians are adjusted so as to maximize the likelihood of speech data given the mixture model.

7. The method according to claim 2 wherein the vector S' of said mixture model is replaced by a vector R', where the vector R' is a lower dimensional vector of log spectral energies in wide frequency bands and wherein the probability of class n conditioned on S' is replaced by the probability of new class n conditioned on R' such that new class n components refer to classes in a mixture model for a vector R.

8. The method according to claim 7 wherein the mixture model for vector R is implemented as a vector quantization mixture model where classes are identified with rigid boundary partitions of acoustic space and the partitions are created by vector quantization and wherein $S_k$ in the expression for the estimator for clean speech:

$$S_k = \sum_{n=1}^{N} S_k | n \ \cdot \ P(n \ | \ R')$$

is conditioned on new class n.

9. The method according to claim 7 wherein the mixture model for vector R is implemented as a mixture of Gaussians mixture model with the assumptions that the probabilities $P_n(R_j)$ are Gaussian distributions and the mean and standard deviations of these Gaussians are adjusted so as to maximize the likelihood of speech data given the mixture model and wherein $S_k$ in the expression for the estimator for clean speech:

$$S_k = \sum_{n=1}^{N} S_k | n \ \cdot \ P(n | R')$$

is conditioned on new class n.

10. A method for preprocessing signals representative of digitized speech in the presence of noise, comprising the steps of:

    training a Markov model with clean speech, each state of the Markov model representing a different speech class assuming different frequency channels are uncorrelated within each class, to produce parameters for said Markov model;
    categorizing each time-invariant segment of digitized speech and noise into a noisy speech vector, each element of said noisy speech vector representing one frequency channel of speech information in the presence of noise, said noise being assumed to be frequency independent and time invariant;
    determining a probability distribution of the clean speech vector by applying the noisy speech vector to the Markov model using said parameters;
    modelling a conditional probability function of a vector of noisy speech around a vector of clean speech as uncorrelated at different frequency channels; and

estimating a clean speech signal comprising a clean speech vector for each vector of a sequence of said noisy speech vectors $S'_0$ to $S'_T$ based on the determined probability distribution and the modelled conditional probability function.

11. The method according to claim 10, wherein said estimating step comprises:
estimating filter log spectral energies on a multiple-frequency channel probability according to

$$\mathbf{S}_k = \sum_n \hat{\mathbf{S}}_k|n \cdot \mathbf{P}(n|\mathbf{S'}_0, \ldots, \mathbf{S'}_t \ldots \mathbf{S'}_T)$$

where index n is a state and where the estimate of $S_k$ around n is the $n^{th}$ MMSE estimator given by:

$$\hat{S}_k|n = \frac{1}{P(S'_k|n)} \int S_k \, P(S'_k|S_k) \, P_n(S_k) \, dS_k$$

where

$$P(S'_k|n) = \int P(S'_k|S_k) \, P_n(S_k) \, dS_k$$

where a Hidden Markov model is assumed for the speech, and the Hidden Markov state output probabilities are specified by:

$$\mathbf{P}(\mathbf{S'}|n) = \prod_{k=1}^{K} \mathbf{P}(\mathbf{S'}_k|n).$$

and where a forward-backward algorithm is applied to compute $P(n|S'_0,...,S'_t...S'_T)$.

12. The method according to claim 10 wherein said conditional probability of a clean speech vector around a noisy speech vector $P(S'_k|S_k)$ is modeled as follows:

1) noise associated with said speech to be estimated is assumed to be a stationary, autoregressive moving average stochastic process such that, at each time frame, coefficients of a discrete Fourier transform (DFT) for said noise are uncorrelated complex Gaussian random variables;
2) filter output energy is assumed to be approximated by a sum of M coefficients;
3) noise spectral power is assumed to be uniform within a range of summation;

such that, in the absence of noise, said summation extends over a total of 2M random variables which are Gaussian, of zero mean and of a variance:

$$\sigma^2 = (N_k)/(2M)$$

where $N_k$ is the expected value of the noise filter energy wherein variance-normalized filter energy obeys a chi-squared probability distribution (PD) with 2M degrees of freedom, and
such that, in the presence of speech and noise, filter energy is given by:

$$\mathbf{E'}_k = \sum_i |\mathbf{DFT}_s(i) + \mathbf{DFT}_n(i)|^2$$

where $DFT_s$ refers to speech coefficients and $DFT_n$ refers to noise coefficients, wherein said variance-normalized filter obeys a probability distribution of noncentral chi-squared with 2M degrees of freedom and noncentral parameter $\lambda$;
in order that the conditional probability of the filter energy is given by:

$$\mathbf{P}\left[\frac{\mathbf{E'}_k}{\mathbf{N}_k} \middle| \frac{\mathbf{E}_k}{\mathbf{N}_k}\right] = 2\mathbf{M} \cdot \chi^2_{\mathbf{N.C.}}\left[\frac{2\mathbf{ME'}_k}{\mathbf{N}_k}; 2\mathbf{M}, \lambda\right]$$

where

$$\lambda = \sum_i \frac{|DFT_s(i)|^2}{\sigma^2} = \frac{2ME_k}{N_k}$$

so that, with the following normalized log-energy variable defined as:

$$S_k = 10 \ \log_{10} \left[\frac{E_k}{N_k}\right] \ ; \ S'_k = 10 \ \log_{10} \left[\frac{E'_k}{N_k}\right],$$

the conditional probability for $S'_k$ is given by

$$P \ (S'_k | S_k) = 0.23 \ \frac{E'_k}{N_k} \ P\left[\frac{E'_k}{N_k} \ \Big| \ \frac{E_k}{N_k}\right].$$

**13.** The method according to claim 10 wherein said Markov model is implemented as a vector quantization Markov model where states are identified with rigid boundary partitions of the acoustic space and the partitions are created by vector quantization.

**14.** The method according to claim 11 wherein the vector S' of said mixture model is replaced by a vector R', where the vector R' is a lower dimensional vector of log spectral energies in wide frequency bands and wherein the probability of state n conditioned on sequence of S'(t) where t is from zero to T is replaced by the probability of new state n conditioned on sequence of R'(t) where t is from zero to T such that new state n components refer to states in a Markov model for a vector R.

**15.** The method according to claim 14 wherein the mixture model for vector R is implemented as a vector quantization Markov model where states are identified with rigid boundary partitions of the acoustic space and the partitions are created by vector quantization and $S_k$ is conditioned on new state n.

**Patentansprüche**

**1.** Verfahren zum Aufbereiten von Signalen, die digitalisierter Sprache in Gegenwart von Rauschen entsprechen, welches die folgenden Schritte aufweist:

Einordnen eines jeden zeitinvarianten Abschnittes von digitalisierter Sprache und Rauschen in die Kategorie eines Vektors verrauschter Sprache, wobei jedes Element des Vektors verrauschter Sprache einem Frequenzkanal von Sprachinformationen bei vorhandenem Rauschen entspricht, wobei angenommen wird, daß das Rauschen additiv, zeitinvariant und mit dem Frequenzbereich nicht korreliert ist,
Bestimmen der Wahrscheinlichkeitsverteilung klarer (unverrauschter) Sprache durch Anwenden des Vektors verrauschter Sprache auf ein Mischungsmodell, welches aus einer Mischung von Komponenten zusammengesetzt ist, wobei jede Komponente einer anderen Sprachklasse entspricht unter der Annahme, daß die verschiedenen Frequenzkanäle innerhalb jeder Klasse nicht miteinander korreliert sind,
Formen bzw. Ausbilden der bedingten Wahrscheinlichkeitsfunktion eines Vektors verrauschter Sprache um einen Vektor unverrauschter Sprache herum, und zwar ohne Korrelation zwischen verschiedenen Frequenzkanälen, und
Einschätzen eines unverrauschten Sprachsignales, welches einen unverrauschten Sprachvektor für jedes der Elemente aus dem verrauschten Sprachvektor aufweist auf der Basis der vorbestimmten Wahrscheinlichkeitsverteilung und des Modells der bedingten Wahrscheinlichkeitsfunktion.

**2.** Verfahren nach Anspruch 1, wobei der Einschätzungsschritt aufweist:
Abschätzen der logarithmischen, spektralen Energien des Filters in einer Vielkanalfrequenzwahrscheinlichkeit gemäß der Funktion:

$$S_k = \sum_{n=1}^{N} S_k \mid n \cdot P(n) \mid S')$$

wobei der Index n eine Klasse definiert und wobei die Abschätzung von $S_k$ um n herum, die nach der n-ten Klasse aufbereitete MMSE-Abschätzung ist, die gegeben ist durch:

$$S_k \ln = \frac{1}{P(S'_k \ln)} \int S_k \, P(S'_k | S_k) \, P_n(S_k) \, dS_k$$

wobei

$$P(S'_k \ln) = \int P(S'_k | S_k) \, P_n(S_k) \, dS_k$$

**3.** Verfahren nach Anspruch 2, wobei der Abschätzungsschritt das Anwenden einer Abschätzung eines minimalen, logarithmischen Spektralabstandes zum Vektor der verrauschten Sprache aufweist, um eine Abschätzung eines euklidischen Abstandes zu erhalten.

**4.** Verfahren nach Anspruch 1, wobei die bedingte Wahrscheinlichkeit eines Vektors verrauschter Sprache um einen Vektor $P(S'_k | S_k)$ unverrauschter Sprache folgendermaßen modellhaft wiedergegeben wird:

1) rauschbezogen, wobei die abzuschätzende Sprache als ein stationärer, selbstregressiv fortschreitender, mittlerer stochastischer Vorgang ist, so daß in jedem Zeitrahmen Koeffizienten einer diskreten Fourier-Transformierten (DFT) des Rauschens nicht miteinander korrelierte, komplexe Gaußsche Zufallsvariablen sind,
2) die Ausgangsenergie des Filters wird als durch eine Summe von M Koeffizienten angenähert betrachtet,
3) die spektrale Rauschenergie wird innerhalb eines Bereiches von Durchlaßbanden der Filter als gleichförmig angenommen,

so daß bei ausschließlicher Anwesenheit von Rauschen die Summierung sich über insgesamt 2M Zufallsvariable erstreckt, die Gaußsche Variable mit dem Hauptwert 0 und einer Varianz:

$$\sigma^2 = (N_k)/(2M)$$

sind, wobei $N_k$ der Erwartungswert der Rauschfilterenergie ist, und wobei die mit der Varianz normalisierte Filterenergie einer Chi-Quadrat-Wahrscheinlichkeitsverteilung (PD) mit 2M Freiheitsgraden folgt, und so, daß bei Anwesenheit von Sprache und Rauschen die Filterenergie gegeben ist durch:

$$E'_k = \sum_1 | DFT_s(i) + DFT_n(i) |^2$$

wobei $DFT_g$ sich auf Sprachkoeffizienten und $DFT_n$ auf Rauschkoeffizienten bezieht, wobei der varianznormalisierte Filter einer Wahrscheinlichkeitsverteilung mit nicht zentralem Chi-Quadrat mit 2M Freiheitsgraden und einem Dezentral-Parameter $\lambda$ folgt, so daß die bedingte Wahrscheinlichkeit der Filterenergie gegeben ist durch:

$$P \left[ \frac{E'_k}{N_k} \mid \frac{E_k}{N_k} \right] = 2M \cdot \chi^2_{N.C.} \left[ \frac{2ME'_k}{N_k}, \, 2M, \lambda \right]$$

wobei

$$\lambda = \sum_i \frac{| DFT_s(i) |^2}{\sigma^2} = \frac{2ME_k}{N_k}$$

so daß mit der Definition der folgenden, normalisierten Variablen logarithmischer Energie als:

$$S_k = 10 \log_{10} \left[ \frac{E_k}{N_k} \right] \; ; \; S'_k = 10 \log_{10} \left[ \frac{E'_k}{N_k} \right] ,$$

die bedingte Wahrscheinlichkeit für $S'_k$ gegeben ist durch:

$$P \quad (S'_k \mid S_k) = 0.23 \; \frac{E'_k}{N_k} \quad P\left[ \frac{E'_k}{N_k} \; \middle| \; \frac{E_k}{N_k} \right] .$$

5. Verfahren nach Anspruch 1, wobei das Mischungsmodell als ein Mischungsmodell mit Vektorquantisierung eingesetzt wird, wobei die Klassen mit starren Grenzabschnitten des akustischen Raumes gekennzeichnet werden und die Abschnitte durch Vektorquantisierung erzeugt werden.

6. Verfahren nach Anspruch 1, wobei das Mischungsmodell als eine Mischung eines Gaußschen Mischungsmodells mit den Annahmen verwendet wird, daß die Wahrscheinlichkeiten Pn(Sk) Gaußsche Verteilungen sind und daß die mittleren und Standardabweichungen von diesen Gaußschen Funktionen so eingestellt werden, daß sie die Wahrscheinlichkeit der durch das Mischungsmodell gegebenen Sprachdaten maximal machen.

7. Verfahren nach Anspruch 2, wobei der Vektor S' des Mischungsmodells durch einen Vektor R' ersetzt wird, wobei der Vektor R' ein Vektor niedrigerer Dimension der logarithmischen Spektralenergien in breiten Frequenzbändern ist und wobei die Wahrscheinlichkeit von nach der Klasse n aufbereitetem S' ersetzt wird durch die Wahrscheinlichkeit von nach der neuen Klasse n aufbereitetem R', so daß die Komponenten der neuen Klasse n sich auf Klassen in einem Mischungsmodell für einen Vektor R beziehen.

8. Verfahren nach Anspruch 7, wobei das Mischungsmodell für den Vektor R als ein Vektorquantisierungsmischungsmodell eingesetzt bzw. eingeführt wird, wobei die Klassen mit starren Grenzabschnitten des akustischen Raumes gekennzeichnet werden und die Frequenzabschnitte durch Vektorquantisierung erzeugt werden, und wobei $S_k$ in dem Ausdruck für die Abschätzung der unverrauschten Sprache:

$$S_k = \sum_{n=1}^{N} S_k \mid n \cdot P(n \mid R')$$

auf bzw. mit einer neuen Klasse n aufbereitet wird.

9. Verfahren nach Anspruch 7, wobei das Mischungsmodell für den Vektor R als eine Mischung eines Gaußschen Mischungsmodells mit den Annahmen eingeführt wird, daß die Wahrscheinlichkeiten $P_n(R_j)$ Gaußsche Verteilungen sind und daß die mittleren und Standardabweichungen dieser Gaußschen Funktionen so eingestellt werden, daß sie die Wahrscheinlichkeit der durch das Mischungsmodell gegebenen Sprachdaten maximal machen und wobei $S_k$ in dem Ausdruck für die Abschätzung der unverrauschten Sprache:

$$S_k = \sum_{n=1}^{N} S_k \mid n \cdot P(n \mid R')$$

auf bzw. mit einer neuen Klasse n aufbereitet wird.

10. Verfahren zum Aufbereiten von Signalen, die digitalisierte Sprache bei Anwesenheit von Rauschen wiedergeben, mit den folgenden Schritten:

Einüben eines Markov-Modells mit rauschfreier Sprache, wobei jeder Zustand des Markov-Modells einer anderen Sprachklasse entspricht unter der Annahme, daß verschiedene Frequenzkanäle innerhalb jeder Klasse nicht korreliert sind, um Parameter für das Markov-Modell zu erzeugen,

Einordnen jedes zeitinvarianten Abschnittes aus digitalisierter Sprache und Rauschen nach Kategorien in einen Vektor verrauschter Sprache, wobei jedes Element des Vektors verrauschter Sprache einen Frequenzkanal an Sprachinformationen bei der Anwesenheit von Rauschen wiedergibt, wobei angenommen wird, daß das Rauschen frequenzunabhängig und zeitinvariant ist,

Bestimmen einer Wahrscheinlichkeitsverteilung des Vektors rauschfreier Sprachen durch Anwenden des Vektors verrauschter Sprache auf das Markov-Modell unter Verwendung der Parameter,

modellhaftes Aufbauen einer bedingten Wahrscheinlichkeitsfunktion eines Vektors verrauschter Sprache um einen Vektor rauschfreier Sprache herum, und zwar als unkorreliert bei verschiedenen Frequenzkanälen, und

Abschätzen eines Signals rauschfreier Sprache, welches einen Vektor rauschfreier Sprache aufweist, und zwar für jeden Vektor eine Folge von Vektoren $S'_o$ bis $S'_r$ verrauschter Sprache auf der Basis der bestimmten Wahrscheinlichkeitsverteilung und der modellhaft aufgebauten bedingten Wahrscheinlichkeitsfunktion.

11. Verfahren nach Anspruch 10, wobei der Abschätzschritt aufweist:

Abschätzen des Logarithmus der Spektralenergien des Filters auf einer Mehrfrequenzkanalwahrscheinlichkeit gemäß

$$S_k = \sum_n S_k \mid n \cdot P(n \mid S'_o,....,S'_t...S'_T)$$

wobei der Index $n$ ein Zustand ist und wobei die Abschätzung von $S_k$ um $n$ herum die $n$-te MMSE-Abschätzung ist, die gegeben ist durch:

$$\hat{S}_k \mid n = \frac{1}{P(S'_k \mid n)} \int S_k \, P(S'_k \mid S_k) \, P_n(S_k) \, dS_k$$

wobei

$$P(S'_k \mid n) = \int P(S'_k \mid S_k) \, P_n(S_k) \, dS_k$$

wobei für die Sprache ein verstecktes Markov-Modell angenommen wird und wobei die Ausgangswahrscheinlichkeiten des verstecken Markov-Zustandes spezifiziert werden durch:

$$P(S' \mid n) = \prod_{k=1}^{K} P(S'_k \mid n)$$

und wobei ein Vorwärts-Rückwärtsalgorithmus angewendet wird, um $P(n \mid S'_o,....,S'_t \, S'_T)$ zu berechnen.

12. Verfahren nach Anspruch 10, wobei die bedingte Wahrscheinlichkeit eines Vektors rauschfreier Sprache um einen Vektor $P(S'_k \mid S_k)$ folgendermaßen modellhaft wiedergegeben wird:

1) das mit der Sprache verknüpfte Rauschen wird ein stationärer, autoregressiv fortschreitender durchschnittlicher stochastischer Vorgang sein, so daß bei jedem Zeitrahmen Koeffizienten einer diskreten Fourier-Transformierten (DFT) für das Rauschen unkorrelierte komplexe Gaußsche Zufallsvariablen sind,

2) die Ausgangsenergie des Filters wird als durch eine Summe von M Koeffizienten angenähert angenommen,

3) es wird angenommen, daß die Spektralenergie des Rauschens innerhalb eines Bereiches der Aufsummierung gleichförmig ist,

so daß dann, bei Abwesenheit von Rauschen, die Summierung sich insgesamt über 2M Zufallsvariable erstreckt, die Gaußsche Variable sind und einen Mittelwert 0 und eine Varianz:

$$\sigma^2 = (N_k)/(2M)$$

haben, wobei der Erwartungswert der Energie des Rauschfilters $N_k$ ist, wobei die varianznormalisierte Filterenergie einer Chi-Quadrat-Wahrscheinlichkeitsverteilung (PD) mit 2M Freiheitsgraden folgt, und

so daß bei Anwesenheit von Sprache und Rauschen die Filterenergie gegeben ist durch:

$$E'_k = \sum_i \mid DFT_g(i) + DFT_n(i) \mid^2$$

wobei $DFT_g$ sich auf Sprachkoeffizienten und $DFT_n$ sich auf Rauschkoeffizienten bezieht, wobei der varianznormalisierte Filter einer Wahrscheinlichkeitsfunktion von nicht zentralem Chi-Quadrat mit 2M Freiheitsgraden und einem nicht zentralen Parameter $\lambda$ folgt,

damit die bedingte Wahrscheinlichkeit der Filterenergie gegeben ist durch:

$$P\left[\frac{E'_k}{N_k} \mid \frac{E_k}{N_k}\right] = 2M \cdot \chi^2_{N.C.}\left[\frac{2ME'_k}{N_k}; \ 2M, \lambda\right]$$

wobei

$$\lambda = \sum_i \frac{|DFT_e(i)|^2}{\sigma^2} = \frac{2ME_k}{N_k}$$

so daß dann, wenn die folgende, normalisierte logarithmische Energievariable, welche als

$$S_k = 10 \ \log_{10}\left[\frac{E_k}{N_k}\right] \ ; \ S'_k = 10 \ \log_{10}\left[\frac{E'_k}{N_k}\right]$$

definiert ist, die bedingte Wahrscheinlichkeit für $S'_k$ gegeben ist durch

$$P \quad (S'_k | S_k) = 0.23 \ \frac{E'_k}{N_k} \ P\left[\frac{E'_k}{N_k} \mid \frac{E_k}{N_k}\right] \ .$$

13. Verfahren nach Anspruch 10, wobei das Markov-Modell als ein vektorquantisiertes Markov-Modell verwirklicht wird, bei welchem Zustände mit festen Grenzabschnitten des akustischen Raumes gekennzeichnet werden und wobei die Abschnitte durch Vektorquantisierung erzeugt werden.

14. Verfahren nach Anspruch 11, wobei der Vektor S' des Mischungsmodells durch einen Vektor R' ersetzt wird, bei welchem der Vektor R' ein Vektor niedrigerer Dimension des Logarithmus der Spektralenergien in breiten Frequenzbandern ist und wobei die Wahrscheinlichkeit des in der Folge von S'(t) aufbereiteten Zustandes n, wobei t von 0 bis T lauft, durch die Wahrscheinlichkeit des auf der Folge von R'(t) aufbereiteten neuen Zustandes n ersetzt wird, wobei t von 0 bis T lauft, so daß die Komponenten des neuen Zustandes n sich auf Zustände in einem Markov-Modell für einen Vektor R beziehen.

15. Verfahren nach Anspruch 14, wobei das Mischungsmodell für den Vektor R als ein vekturquantisiertes Markov-Modell verwirklicht wird, bei welchem Zustände mit starren Grenzabschnitten des akustischen Raumes gekennzeichnet werden und wobei die Abschnitte durch Vektorquantisierung erzeugt werden und $S_k$ auf dem neuen Zustand n aufbereitet wird.

**Revendications**

1. Procédé de prétraitement de signaux représentatifs d'une parole numérisée en présence de bruit, comprenant les étapes :

de classement en catégories de chaque segment invariant dans le temps de parole numérisée et de bruit en un vecteur de parole chargée de bruit, chaque élément dudit vecteur de parole chargée de bruit représentant un canal de fréquences d'information de parole en présence de bruit, ledit bruit étant supposé être additif, invariant dans le temps et non corrélé au domaine fréquenciel ;
de détermination de la répartition de probabilité de parole nette en appliquant le vecteur de parole chargée de bruit à un modèle de mélange composé d'un mélange de composantes, chaque composante représentant une classe de parole différente en supposant que des canaux de fréquences différents ne sont pas corrélés à l'intérieur de chaque classe ;

de modélisation de la fonction de probabilité conditionnelle d'un vecteur de parole chargée de bruit autour d'un vecteur de parole nette, en tant que non corrélé à des canaux de fréquences différents ; et

d'estimation d'un signal de parole nette comprenant un vecteur de parole nette pour chacun desdits éléments provenant dudit vecteur de parole chargée de bruit en se basant sur la répartition de probabilité déterminée et sur la fonction de probabilité conditionnelle modélisée.

2. Procédé selon la revendication 1, dans lequel ladite étape d'estimation comprend :

l'estimation d'énergies spectrales logarithmiques de filtre sur une probabilité de canaux de fréquences multiples selon la fonction :

$$S_k = \sum_{n=1}^{N} S_k \mid n . P(n \mid S')$$

où, l'indice n est une classe et où l'estimation de $S_k$ autour de n est le $n^{ème}$ estimateur de MMSE (erreur carrée moyenne minimale) conditionné en classe, donné par:

$$S_k \, \ln = \frac{1}{P(S'_k \ln)} \int S_k \, P(S'_k | S_k) \, P_n(S_k) \, dS_k$$

où,

$$P(S'_k \ln) = \int P(S'_k | S_k) P_n(S_k) dS_k.$$

3. Procédé selon la revendication 2, dans lequel ladite étape d'estimation comprend l'application d'une estimation de distance spectrale logarithmique moyenne minimale audit vecteur de parole chargée de bruit pour obtenir une estimation de distance euclidienne.

4. Procédé selon la revendication 1, dans lequel ladite probabilité conditionnelle d'un vecteur de parole chargée de bruit autour d'un vecteur de parole nette $P(S'_k | S_k)$ est modélisée comme suit :

1) le bruit associé à ladite parole à estimer est supposé être un processus stochastique à moyenne mobile autorégressive, stationnaire, tel que, à chaque trame temporelle, les coefficients d'une transformée de Fourier discrète (DFT) pour ledit bruit ne sont pas corrélés à des variables aléatoires gaussiennes complexes ;
2) l'énergie de sortie de filtre est supposée être approchée par une somme de M coefficients ;
3) la puissance spectrale du bruit est supposée être uniforme à l'intérieur d'une plage de bandes passantes de filtres ;

de façon telle qu'en présence du bruit seul, ladite sommation s'étend sur un total de 2M variables aléatoires qui sont gaussiennes, de moyenne nulle et de variance :

$$\sigma^2 = (N_k)/(2M)$$

où, $N_k$ est la valeur attendue de l'énergie de filtre de bruit, l'énergie de filtre normalisée en variance obéissant à une répartition de probabilité (PD) de khi au carré avec 2M degrés de liberté ; et
de façon telle que, en présence de parole et de bruit, l'énergie de filtre soit donnée par:

$$E'_k = \sum_i \left| DFT_s(i) + DFT_n(i) \right|^2$$

où, $DFT_s$ se rapporte à des coefficients de parole et $DFT_n$ se rapporte à des coefficients de bruit, ledit filtre normalisé en variance obéissant à une répartition de probabilité de khi au carré, non centrale, avec 2M degrés de liberté et un paramètre non central $\lambda$ ;
afin que la probabilité conditionnelle de l'énergie de filtre soit donnée par:

$$P\left[\frac{E'_k}{N_k} \mid \frac{E_k}{N_k}\right] = 2M.X^2_{N.C.}\left[\frac{2ME'_k}{N_k}, 2M, \lambda\right]$$

où,

$$\lambda = \sum_i \frac{|DFT_s(i)|^2}{\sigma^2} = \frac{2ME_k}{N_k}$$

de sorte qu'avec la variable d'énergie logarithmique normalisée suivante définie comme :

$$S_k = 10 \log_{10}\left[\frac{E_k}{N_k}\right] \quad ; \quad S'_k = 10 \log_{10}\left[\frac{E'_k}{N_k}\right],$$

la probabilité conditionnelle pour $S'_k$ est donnée par :

$$P(S'_k | S_k) = 0,23 \frac{E'_k}{N_k} P\left[\frac{E'_k}{N_k} | \frac{E_k}{N_k}\right].$$

**5.** Procédé selon la revendication 1, dans lequel ledit modèle de mélange est réalisé comme un modèle de mélange de quantification vectorielle où les classes sont identifiées à l'aide de séparations par frontières rigides de l'espace acoustique et les séparations sont créées par quantification vectorielle.

**6.** Procédé selon la revendication 1, dans lequel ledit modèle de mélange est réalisé sous forme d'un mélange de modèle de mélange gaussien en supposant que les probabilités $Pn(S_k)$ sont des répartitions gaussiennes et les écarts moyens et les écarts-types de ces gaussiens sont ajustés de façon à maximiser la vraisemblance des données de parole, étant donné le modèle de mélange.

**7.** Procédé selon la revendication 2, dans lequel le vecteur S' dudit modèle de mélange est remplacé par un vecteur R', le vecteur R' étant un vecteur dimensionnel plus faible des énergies spectrales logarithmiques dans des bandes de fréquences larges ; et dans lequel la probabilité de classe n conditionnée sur S' est remplacée par la probabilité de nouvelle classe n conditionnée sur R' de façon telle que les composantes de nouvelle classe n se rapportent à des classes dans un modèle de mélange pour un vecteur R.

**8.** Procédé selon la revendication 7, dans lequel le modèle de mélange pour le vecteur R est réalisé comme un modèle de mélange de quantification vectorielle où les classes sont identifiées à l'aide de séparations par frontières rigides de l'espace acoustique et les séparations sont créées par quantification vectorielle ; et dans lequel $S_k$ dans l'expression pour l'estimateur pour la parole nette :

$$S_k = \sum_{n=1}^{N} S_k \ | n . P(n | R')$$

est conditionnée sur la nouvelle classe n.

**9.** Procédé selon la revendication 7, dans lequel le modèle de mélange pour le vecteur R est réalisé sous forme d'un mélange de modèle de mélange gaussien en supposant que les probabilités $P_n(R_i)$ sont des répartitions gaussiennes et les écarts moyens et les écarts-types de ces gaussiens sont ajustés de façon à maximiser la vraisemblance des données de parole, étant donné le modèle de mélange ; et dans lequel $S_k$ dans l'expression pour l'estimateur pour la parole nette :

$$S_k = \sum_{n=1}^{N} S_k \ | n . P(n | R')$$

est conditionnée sur la nouvelle classe n.

**10.** Procédé de prétraitement de signaux représentatifs d'une parole numérisée en présence de bruit, comprenant les étapes :

de simulation d'un modèle de Markov avec une parole nette, chaque état du modèle de Markov représentant une classe de parole différente en supposant que des canaux de fréquences différents sont non corrélés à l'intérieur de chaque classe, pour produire des paramètres pour ledit modèle de Markov ;

de classement en catégories de chaque segment invariant dans le temps de parole numérisée et de bruit en un vecteur de parole chargée de bruit, chaque élément dudit vecteur de parole chargée de bruit représentant un canal de fréquences d'information de parole en présence de bruit, ledit bruit étant supposé être indépendant de la fréquence et invariant dans le temps ;

de détermination d'une répartition de probabilité de parole nette en appliquant le vecteur de parole chargée de bruit à un modèle de Markov utilisant lesdits paramètres ;

de modélisation d'une fonction de probabilité conditionnelle d'un vecteur de parole chargée de bruit autour d'un vecteur de parole nette, en tant que non corrélé à des canaux de fréquences différents ; et

d'estimation d'un signal de parole nette comprenant un vecteur de parole nette pour chaque vecteur d'une séquence desdits vecteurs de parole chargée de bruit $S'_o$ à $S'_\tau$ en se basant sur la répartition de probabilité déterminée et sur la fonction de probabilité conditionnelle modélisée.

11. Procédé selon la revendication 10, dans lequel ladite étape d'estimation comprend :

l'estimation d'énergies spectrales logarithmiques de filtre sur une probabilité de canaux de fréquences multiples selon :

$$S_k = \sum_n \hat{S}_k \mid n \cdot P(n \mid S'_0, ..., S'_t, ..., S'_\tau)$$

où, l'indice n est un état et où l'estimation de $S_k$ autour de n est le $n^{ème}$ estimateur de MMSE donné par :

$$\hat{S}_k \mid n = \frac{1}{P(S'_k \mid n)} \int S_k \, P(S'_k \mid S_k) \, P_n(S_k) \, dS_k$$

où,

$$P(S'_k \mid n) = \int P(S'_k \mid S_k) \, P_n(S_k) \, dS_k$$

où, l'on suppose un modèle de Hidden Markov pour la parole, et où les probabilités de sortie d'état d'Hidden Markov sont spécifiées par :

$$P(S' \mid n) = \Pi_{k=1}^{K} \, P(S'_k \mid n)$$

et où l'on applique un algorithme bidirectionnel pour calculer $P(n \mid S'0, ..., S'_t, ..., S'_\tau)$.

12. Procédé selon la revendication 10, dans lequel ladite probabilité conditionnelle d'un vecteur de parole nette autour d'un vecteur de parole chargée de bruit $P(S'_k \mid S_k)$ est modélisée comme suit :

1) le bruit associé à ladite parole à estimer est supposé être un processus stochastique à moyenne mobile autorégressive, stationnaire, tel que, à chaque trame temporelle, les coefficients d'une transformée de Fourier discrète (DFT) pour ledit bruit ne sont pas corrélés à des variables aléatoires gaussiennes complexes ;

2) l'énergie de sortie de filtre est supposée être approchée par une somme de M coefficients ;

3) la puissance spectrale du bruit est supposée être uniforme à l'intérieur d'une plage de sommation ;

de façon telle qu'en l'absence de bruit, ladite sommation s'étend sur un total de 2M variables aléatoires qui sont gaussiennes, de moyenne nulle et de variance :

$$\sigma^2 = (N_k)/(2M)$$

où, $N_k$ est la valeur attendue de l'énergie de filtre de bruit, l'énergie de filtre normalisée en variance obéissant à une répartition de probabilité (PD) de khi au carré avec 2M degrés de liberté ; et

de façon telle que, en présence de parole et de bruit, l'énergie de filtre soit donnée par :

$$E'_k = \sum_i \mid DFT_s(i) + DFT_n(i) \mid^2$$

où, $DFT_s$ se rapporte à des coefficients de parole et $DFT_n$ se rapporte à des coefficients de bruit, ledit filtre normalisé en variance obéissant à une répartition de probabilité de khi au carré, non centrale, avec 2M degrés de liberté et un paramètre non central $\lambda$ ;

afin que la probabilité conditionnelle de l'énergie de filtre soit donnée par:

$$P\left[\frac{E'_k}{N_k}\Big|\frac{E_k}{N_k}\right] = 2M.X^2{}_{N.C.}\left[\frac{2ME'_k}{N_k},2M,\lambda\right]$$

où,

$$\lambda = \sum_i \frac{|DFT_s(i)|^2}{\sigma^2} = \frac{2ME_k}{N_k}$$

de sorte qu'avec la variable d'énergie logarithmique normalisée suivante définie comme :

$$S_k = 10\,\log_{10}\left[\frac{E_k}{N_k}\right] \;\; ; \;\; S'_k = 10\,\log_{10}\left[\frac{E'_k}{N_k}\right],$$

la probabilité conditionnelle pour $S'_k$ est donnée par :

$$P(S'_k|S_k) = 0{,}23\,\frac{E'_k}{N_k}\,P\left[\frac{E'_k}{N_k}\Big|\frac{E_k}{N_k}\right].$$

13. Procédé selon la revendication 10, dans lequel ledit modèle de Markov est réalisé sous forme d'un modèle de Markov à quantification vectorielle où les états sont identifiés à l'aide de séparations par frontières rigides de l'espace acoustique et les séparations sont créées par quantification vectorielle.

14. Procédé selon la revendication 11, dans lequel le vecteur S' dudit modèle de mélange est remplacé par un vecteur R', le vecteur R' étant un vecteur dimensionnel plus faible des énergies spectrales logarithmiques dans des bandes de fréquences larges ; et dans lequel la probabilité d'état n conditionné sur S'(t), où t va de 0 à T, est remplacée par la probabilité de nouvel état n conditionné sur la séquence de R'(t), où t va de 0 à T, de façon telle que les composantes de nouvel état n se réfèrent aux états d'un modèle de Markov pour un vecteur R.

15. Procédé selon la revendication 14, dans lequel le modèle de mélange pour le vecteur R est réalisé sous forme d'un modèle de Markov à quantification vectorielle où les états sont identifiés à l'aide de séparations par frontières rigides de l'espace acoustique et les séparations sont créées par quantification vectorielle, et où $\hat{S}_k$ est conditionné sur le nouvel état n.

*FIG. 1*

$$\hat{S}_k = \sum_{n=1}^{N} \hat{S}_k|n \cdot P(n|\vec{S'})$$

*FIG. 2*

```
┌─────────────────────────────┐
│    INITIALIZE ESTIMATES      │──── AA
│       OF  C, μ, σ            │
└─────────────────────────────┘
                │
                ▼
┌─────────────────────────────┐
│     COMPUTE γₙ (t)           │──── AB
│  PROBABILITY FOR EACH FRAME t│
│     TO OBTAIN NEW  C, μ, σ   │
└─────────────────────────────┘
                │
                ▼
```

TEST FOR CONVERGENCE ON L

$$L = \sum_t LOG_{10} \left[ \sum_n C_n \ P_n (\vec{S}_t) \right]$$ ──── AC

NO

YES

CONTINUE

*FIG. 3*

$$\vec{S}_0, \vec{S}_1, \vec{S}_2, \cdots, \vec{S}_T \qquad\qquad \hat{\vec{S}}_0, \hat{\vec{S}}_1, \hat{\vec{S}}_2, \cdots, \hat{\vec{S}}_T$$

22

$$\hat{S}_k = \sum_{n=1}^{N} \hat{S}_k|n \cdot P(n|\vec{S}_0, \vec{S}_1, \vec{S}_2, \cdots \vec{S}_T)$$

20

24

*FIG. 4*